# EUROPEAN PATENT SPECIFICATION

(11) **EP 3 810 925 B1**
(45) Date of publication and mention of the grant of the patent: **07.10.2026**
(21) Application number: 19821823.2
(22) Date of filing: 16.06.2019
(51) Int. Cl.: F03D 9/17, B65G 5/00, F17C 1/00, F17C 1/02, E04H 7/14, E04H 7/18

(54) **SYSTEM FOR STORING COMPRESSED FLUID**
SYSTEM ZUR SPEICHERUNG KOMPRIMIERTER FLÜSSIGKEIT
SYSTÈME DE STOCKAGE DE FLUIDE COMPRIMÉ

(30) Priority: 20.06.2018 IL 26017518
(43) Date of publication of application: 28.04.2021
(73) Proprietor: Augwind Ltd., 7403631 Nes Ziyona (IL)
(72) Inventor: YOGEV, Or, 7045214 Gedera (IL)
(74) Representative: Reddie & Grose LLP
(86) International application number: PCT/IL2019/050675
(87) International publication number: WO 2019/244148

(56) References cited:
- EP-A1- 2 832 666
- CH-A- 458 695
- US-A- 3 603 096
- US-A- 4 165 945
- US-A- 5 052 856
- US-A1- 2010 307 147
- US-B1- 9 470 365
- US-B2- 9 562 521

## Description

### TECHNOLOGICAL FIELD

This invention relates generally to a system for storing and utilization of compressed fluid, and more specifically to a system in which compressed fluid is stored underground and later utilized as energy.

### BACKGROUND

It is known that compressed gas can be stored and utilized for many purposes. For example, stored compressed gas can be utilized in the glass and plastic container industry. However, consumption of compressed air in a glass and plastic container production plant is erratic, due to the nature of operation of plastic injection machines using compressed air. Each injection machine requires a short burst of high pressure air every few seconds (one burst per injection). When several of such machines are arranged in a production line, the air consumption profile is unsteady and erratic. A typical plant includes a compression train in which motor-driven compressors compress a certain gas, such as air. Due to the unsteady and erratic consumption profile of compressed air, operation of compressors, in order to supply high pressure air, results in long and often occurring idle time periods, hence energy waste. The erratic behavior of the consumption profile can be mitigated by increasing operating pressure, that likewise results in energy waste. Therefore, using a high volume tank containing and storing compressed air can provide a solution which can overcome the abovementioned problems.

Moreover, the stored potential energy of compressed gas can be utilized for generation of electrical power. The potential energy can, for example, be collected from natural energy sources which are effectively inexhaustible and are abundantly available throughout the world in various forms, such as wind, solar, tidal and wave energy. The energy obtained from natural energy sources can be stored in the form of potential energy of compressed gas, so as to be releasable during periods of power demand, as required. Accordingly, high pressure tanks are required for storing the compressed gas.

Various compressed air storage systems are generally known for the purpose of storing compressed gas. Gas storage tanks can, for example, be constructed on the ground surface, under the ground, and under water.

Gas storage tanks, which are built on the ground, have proven to be not economically viable when high volumes are required. Moreover, they require a high level of maintenance and must accommodate many safety regulations.

In urban areas, it is common to build underground compressed gas tanks in order to accomplish effective use of the ground surface in regions where the underground construction is placed, and to preserve the site's appearance.

For example, U.S. Pat. Appl. Publ. No. 2010/307147 describes a system for storing energy that includes a buried flexible bladder. The bladder is covered with an overfill of earth, stones, or any other material. The weight of the overfill above the bladder pressurizes a fluid stored in the bladder. As the fluid fills the bladder, it expands and lifts the mass of the overfill against gravity. The system will store the energy required to lift the overfill. When desired, the fluid can be released from the bladder, and the gravitational pressure of the overfill above the bladder will force the fluid out of the bladder and into an exit pipe connected to the bladder. Upon release, the volume of the bladder is decreased.

U.S. Pat. No. 9,562,521 describes a compressed air storage system for storing compressed air provided by an air compressing system. The system includes an underground pressure tank having a cavity arranged in a borehole made in the ground, and an inflatable balloon arranged in the cavity configured for storing the compressed air. The inflatable balloon is surrounded by compacted filling material placed between the inflatable balloon and an inner surface of the borehole.

U.S. Pat. No. 4,165,945 describes a pressurized liquid storage system. The system comprises an underground cavity, a lining diaphragm, and attachment of the diaphragm to the cavity using plates embossed with ribs, anchored to the cavity's walls. In particular, the document discloses a storage system for storing compressed fluid comprising an excavation made in the ground, having a shape of an inverted rectangular trapezoidal prism, and a balloon arrangement mounted within the excavation. The balloon arrangement comprises an inflatable balloon configured for storing the compressed fluid, said inflatable balloon having a middle portion and two end portions. One end portion of said two end portions includes a balloon inlet port for providing access to an inner volume of the inflatable balloon, whereas the other end portion includes a balloon outlet port for releasing the compressed fluid from the inner volume. The storage system comprises a filling material placed within a volume between the inflatable balloon, bottom and walls of the excavation, and extending from the bottom up to a top of the excavation, thereby fully surrounding the inflatable balloon, said filling material being in a rigid and immobile state, and configured for providing reinforcement to the inflatable balloon, and for anchoring the inflatable balloon to the excavation. The storage system comprises a gas pipe assembly comprising an inlet gas pipe coupled to the balloon inlet port and configured for filling the inflatable balloon with the compressed fluid, and an outlet gas pipe coupled to the balloon output port, and configured for releasing the compressed fluid. The middle portion of the inflatable balloon has a shape which is tapered with contraction at the two end portions.

European Pat. Publ. No 2 832 666 describes a compressed gas storage system. The system comprises a borehole drilled in rock, a liner sealing the borehole, inlet and outlet pipes and valves, and dewatering system to remove water from the rock in the vicinity of the system.

Swiss Pat. Publ. No. 458 695 describes a storage compartment for liquids, powders, and granulated material. The compartment comprises a concrete cavity with sealing liner and a rebar cage to support the concrete. The cavity is formed by inflating the balloon and casting the concrete around it. Some of the rebar elements are attached to the balloon and are spread as the balloon is inflated.

### SUMMARY

Despite the prior art in the area of underground systems for storing and utilization of compressed gas, there is still a need in the art for further improvement in order to provide a more economical and low-cost gas storage system and method for construction thereof.

It would also be advantageous to have an improved system and method which can effectively utilize available energy from wind turbines and other power generation systems, and store it for later use.

The present invention partially eliminates disadvantages of prior art systems for storing and utilization of compressed gas and provides a novel compressed fluid storage system for storing compressed gas or liquid. The compressed fluid storage system includes a storage system for storing compressed fluid, such as gas and/or liquid.

According to the present invention, there is provided a storage system for storing compressed fluid according to claim 1.

The storage system for storing compressed fluid includes an excavation made in the ground. The excavation has a shape of an inverted rectangular trapezoidal prism. The compressed fluid storage system also includes a balloon arrangement mounted within the excavation.

The balloon arrangement includes a rebar cage arranged within the excavation and an inflatable balloon arranged within the rebar cage. The inflatable balloon is configured for storing the compressed fluid. The rebar cage is configured to provide reinforcement to the inflatable balloon.

The inflatable balloon has a middle portion and two end portions. One end portion includes a balloon inlet port for providing access to an inner volume of the inflatable balloon, whereas the other end portion includes a balloon outlet port for releasing the compressed fluid from the inner volume.

The storage system for storing compressed fluid further includes a filling material placed within a volume between the inflatable balloon, bottom and walls of the excavation. The filling material extends from the bottom up to a top of the excavation, thereby fully surrounding the inflatable balloon. The filling material is in a rigid and immobile state, and provides reinforcement to the inflatable balloon. The filling material also anchors the inflatable balloon to the excavation.

The storage system for storing compressed fluid also includes a gas pipe assembly. The gas pipe assembly includes an inlet gas pipe and an outlet gas pipe. The inlet gas pipe is coupled to the balloon inlet port and is configured for filling the inflatable balloon with the compressed fluid, while the outlet gas pipe is coupled to the balloon output port, and is configured for releasing the compressed fluid.

The rebar cage includes a plurality of rebar rods extending along the inflatable balloon between the two end portions, and rebar hoops configured for binding the rebar rods to form a framework of the rebar cage.

The rebar hoops may be bound to the rebar rods by welding, thereby forming a weldment structure.

The rebar hoops may be bound to the rebar rods by tying them by using steel wires, thereby forming a rigid structure.

The filling material can also act as an adhesive to attach the rebar hoops to the rebar rods thereby forming a rebar cage.

The middle portion of the inflatable balloon has a cylindrical shape which is tapered with contraction at the two end portions towards the balloon inlet and outlet ports. The rebar rods follow an outer contour of the inflatable balloon to conform to its shape. The diameters of the rebar hoops gradually decrease at the two end portions of the inflatable balloon with contraction towards the balloon inlet and outlet ports.

The gas pipe assembly may further include a drainage pipe extending into the volume of the inflatable balloon.

According to the present invention, there is provided a method for producing of a storage system for storing compressed fluid according to claim 7.

The method for producing of a storage system for storing compressed fluid includes providing an excavation in the ground having a shape of an inverted rectangular trapezoidal prism. A balloon arrangement configured for storing the compressed fluid is provided and mounted within the excavation. The balloon arrangement includes a rebar cage arranged within the excavation and an inflatable balloon arranged within the rebar cage.

The inflatable balloon has a middle portion and two end portions. One end portion includes a balloon inlet port for providing access to an inner volume of the inflatable balloon, whereas the other end portion includes a balloon outlet port for releasing the compressed fluid from the inner volume.

A filling material is provided and placed within a volume between the inflatable balloon, bottom and walls of the excavation to extending from the bottom up to a top of the excavation, thereby to fully surround the inflatable balloon. The filling material is in a rigid and immobile state, and configured for providing reinforcement to the inflatable balloon and for anchoring the inflatable balloon to the excavation. In addition, the filling material acts as an adhesive between the rebar rods and the rebar hoops.

A gas pipe assembly is provided. The gas pipe assembly includes an inlet gas pipe configured for filling the inflatable balloon with the compressed fluid and an outlet gas pipe configured for releasing the compressed fluid. The inlet gas pipe is coupled to the balloon inlet port and the outlet gas pipe is coupled to the balloon output port.

The method of producing the storage system for storing compressed fluid may include providing a drainage pipe and provide access of the drainage pipe into the volume of the inflatable balloon.

It should be understood that the system of the present invention is not limited to a gas storage application, but can also be used for storing any type of fluid at low and/or high pressure.

Additional details and advantages of the invention will be set forth in the detailed description.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
**Fig. 1A** illustrates a schematic longitudinal side cross-sectional view of a compressed fluid storage system, according to an embodiment of the present invention;
**Fig. 1B** illustrates a schematic transverse side cross-sectional view of the compressed fluid storage system of Fig. 1A, according to an embodiment of the present invention; and
**Fig. 2** illustrates an elevated perspective view of a balloon arrangement of the compressed fluid storage system of Fig. 1A, according to an embodiment of the present invention.

### DETAILED DESCRIPTION OF EMBODIMENTS

The principles and operation of the underground compressed gas storage system according to the present invention may be better understood with reference to the drawings and the accompanying description. It should be understood that these drawings are given for illustrative purposes only and are not meant to be limiting. It should be noted that the figures illustrating various examples of the system of the present invention are not to scale, and are not in proportion, for purposes of clarity. The same reference numerals and alphabetic characters are utilized for identifying those components which are common in the hydro-pneumatic energy storage system and its components shown in the drawings throughout the present description of the invention. Examples of constructions are provided for selected elements. Those versed in the art should appreciate that many of the examples provided have suitable alternatives which may be utilized.

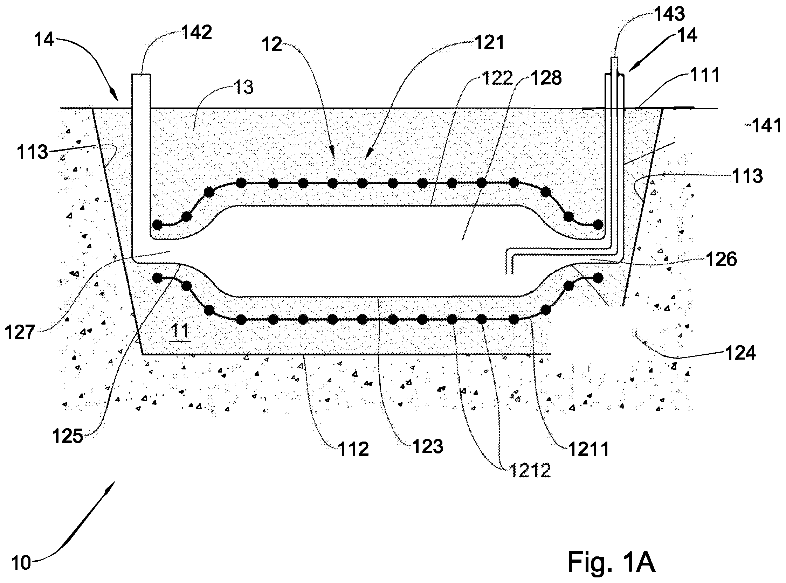

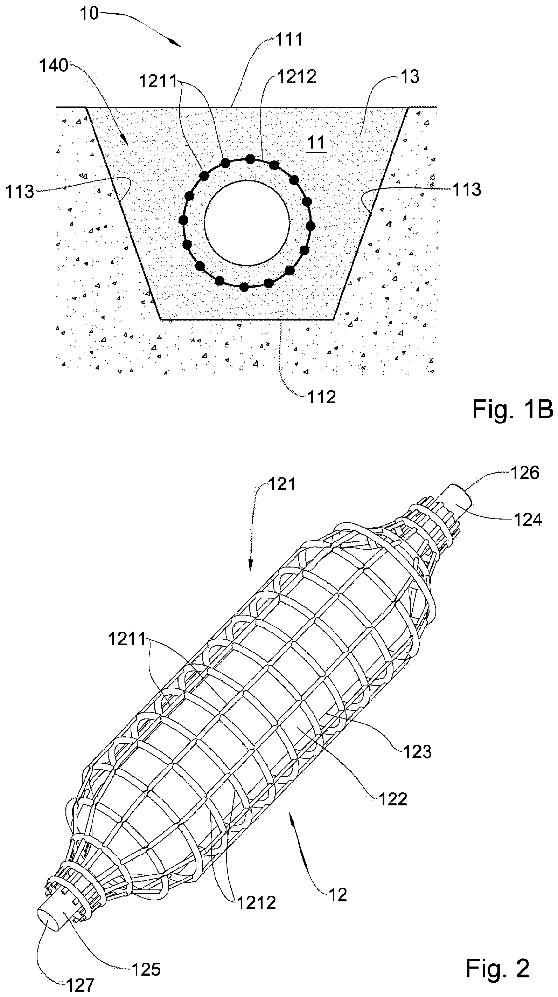

Referring to **Figs. 1A** **and** **1B** a schematic longitudinal and transverse side cross-sectional views of a compressed fluid storage system **10** are illustrated, correspondingly, according to an embodiment of the present invention. The compressed fluid storage system **10** of the present invention can be successfully employed for storing compressed gas, compressed liquid and any other fluid as well, including a mixture of gases and/or liquids.

The compressed fluid storage system **10** includes an excavation **11** made in the ground. The excavation **11** has a shape of an inverted rectangular trapezoidal prism, and has a predetermined depth, and predetermined lengths and widths at a top **111** and at a bottom **112,** correspondingly. It should be understood that differences between the lengths and widths of the excavation **11** at the top **111** and at the bottom **112** are determined by the soil friction angle and depend on the friction shear resistance of the soil.

A depth of the excavation **11** can, for example, be in the range of about 1 meter to 7 meters. A length of the excavation **11** can, for example, be in the range of about 5 meters to 50 meters A bottom width of the excavation can, for example, be in the range of 0.5 meters to 5 meters, a top width of the excavation can, for example, be in the range of 1.5 meters to 10 meters.

The compressed fluid storage system **10** includes a balloon arrangement **12** mounted within the excavation **11.**

**Fig. 2** illustrates an elevated perspective view of a balloon arrangement **12** of the compressed fluid storage system of **Fig. 1A****,** according to an embodiment of the present invention. Referring to **Figs. 1A** **and** **2** together, the balloon arrangement **12** includes a rebar cage **121** arranged within the excavation **11** and an inflatable balloon **122** arranged within the rebar cage **121.** A distance between a ground surface and the rebar cage **121** in the excavation **11** can, for example, be in the range of 0.2 meters to 2 meters

The inflatable balloon **122** is configured for storing compressed gas or any other fluid. The inflatable balloon **122** has a middle portion **123** and two end portions **124** and **125.** One end portion **124** includes a balloon inlet port **126** configured for providing access to an inner volume **128** of the inflatable balloon **122.** The other end portion **125** includes a balloon outlet port **127** for releasing the compressed gas from the inner volume **128.**

The inflatable balloon **122** can, for example, be made of an elastic, durable, strong plastic or rubber material having a braid or other reinforcement that can sustain relatively large deformation. The deformation can, for example, be in the range of about 10% to 500% volume change. It is also required that the balloon's material can resist underground chemical reactions (e.g. soil deposits) and moisture (e.g. rain) infiltration.

The rebar cage **121** includes a plurality of rebar rods **1211** extending along the inflatable balloon **122** between the two end portions **124** and **125,** and rebar hoops **1212** configured for binding the rebar rods **1211** to form a framework of the rebar cage **121.** The rebar hoops **1212** and the rebar rods **1211** can, for example, be made from steel and have a bar cross-sectional diameter in the range of about 1 cm to 3 cm. The rebar hoops **1212** can, for example, be bound to the rebar rods **1211** by welding, thereby to form a grid weldment structure. Alternatively, the rebar hoops **1212** are bound to the rebar rods **1211** by tying them by using steel wires, thereby forming a rigid structure.

A size of a grid cell of the weldment structure can, for example, be in the range of about 5cm to 30 cm. It should be noted that fiber-reinforced plastic rebar can also be used in high-corrosion environments.

In the present invention, the term "about" means within a statistically meaningful range of a value. The allowable variation encompassed by the term "about" depends on the particular system under consideration, and can be readily appreciated by one of ordinary skill in the art. This approximation for the purpose of the present invention can, for example, be interpreted so as to include an error of 20% at least, as long as there is no considerable change in the performance of the gas storage system **10** due to the deviation.

The compressed gas storage system **10** also includes a filling material **13** placed within a volume **14** between the inflatable balloon **122,** the bottom **112** and walls **113** of the excavation **11.** The filling material **13** extends from the bottom **112** up to the top **111** of the excavation **11,** and fully surrounds the inflatable balloon **122.** The filling material **13** is in a rigid and immobile state, and is configured for providing reinforcement in conjunction with the rebar cage to the inflatable balloon **122** and for anchoring the inflatable balloon **122** to the excavation **11.** Examples of a filling material suitable for the purpose of the invention include, but are not limited to, a cement based filling material (e.g., grout), concrete, flowable fill, dirt, or any type of cement mixture.

The compressed gas storage system **10** also includes a gas pipe assembly **14.** The gas pipe assembly **14** includes an inlet gas pipe **141** coupled to the balloon inlet port **126** and configured for filling the inflatable balloon with the compressed fluid. The gas pipe assembly **14** also includes an outlet gas pipe **142** coupled to the balloon output port **127,** and configured for releasing the compressed fluid.

The gas pipe assembly **14** further includes a drainage pipe **143** extending into the bottom part of the volume of the inflatable balloon **122.** The purpose of the drainage pipe **143** is to pump out the fluids (e.g., water, oil, etc.) that can be condensed from the gas as a result of condensation during operation. As shown in **Fig. 1A****,** the drainage pipe **143** can be arranged within the lumen of the inlet gas pipe **141,** however other configurations are also contemplated. For example, the drainage pipe **143** can be arranged within the outlet gas pipe **142,** or may be a pipe separated from the inlet and outlet gas pipes.

The middle portion **123** of the inflatable balloon **122** has a cylindrical shape which is tapered with contraction at the two end portions **124** and **125** towards the balloon inlet and outlet ports **126** and **127** respectively. The rebar rods **1211** follows an outer contour of the inflatable balloon **122** to conform to its shape. Diameters of the rebar hoops of the rebar cage **121** gradually decrease at the two end portions **124** and **125** with contraction towards the balloon inlet and outlet ports **126** and **127** thereby providing additional reinforcement to the inflatable balloon **122** at its ends.

It is important that the scope of the invention is not construed as being limited by the illustrative embodiments set forth herein. Other variations are possible within the scope of the present invention as defined in the appended claims.

## Claims

1. A storage system (10) for storing compressed fluid, comprising:
an excavation (11) made in the ground having a shape of an inverted rectangular trapezoidal prism;
a balloon arrangement mounted within the excavation (11), the balloon arrangement comprising:
a rebar cage (121) arranged within the excavation (11); and
an inflatable balloon (122) arranged within the rebar cage (121) and configured for storing the compressed fluid, said inflatable balloon (122) having a middle portion (123) and two end portions (124, 125), one end portion (124) of said two end portions includes a balloon inlet port (126) for providing access to an inner volume (128) of the inflatable balloon (122), whereas the other end portion (125) includes a balloon outlet port (127) for releasing the compressed fluid from the inner volume (128);
a filling material (13) placed within a volume (14) between the inflatable balloon (122), bottom (112) and walls (113) of the excavation (11), and extending from the bottom (112) up to a top (111) of the excavation (11), thereby fully surrounding the inflatable balloon (122); said filling material (13) being in a rigid and immobile state, and configured for providing further reinforcement in conjunction with the rebar cage (121) to the inflatable balloon (122), and for anchoring the inflatable balloon (122) to the excavation (11); and
a gas pipe assembly (14) comprising:
an inlet gas pipe (141) coupled to the balloon inlet port (126) and configured for filling the inflatable balloon (122) with the compressed fluid; and
an outlet gas pipe (142) coupled to the balloon output port (127), and configured for releasing the compressed fluid,
wherein the rebar cage (121) includes a plurality of rebar rods (1211) extending along the inflatable balloon (122) between the two end portions, and rebar hoops (1212) configured for binding the rebar rods (1211) to form a framework of the rebar cage (121),
wherein the middle portion (123) of the inflatable balloon (122) has a cylindrical shape which is tapered with contraction at the two end portions and towards the balloon inlet (126) and outlet (127) ports,
wherein the rebar rods (1211) follow an outer contour of the inflatable balloon (122) to conform to its shape, and
wherein diameters of the rebar hoops (1212) gradually decrease at the two end portions of the inflatable balloon (122) with contraction towards the balloon inlet (126) and outlet (127) ports.

2. The storage system of claim 1, wherein the rebar hoops (1212) are bound to the rebar rods (1211) by welding thereby forming a weldment structure.

3. The storage system of claim 1, wherein the rebar hoops (1212) are bound to the rebar rods (1211) by tying them by using steel wires, thereby forming a rigid structure.

4. The storage system of any one of claims 1 to 3, wherein the gas pipe assembly (14) further includes a drainage pipe extending into the volume of the inflatable balloon (122).

5. The storage system of claim 1, wherein a bottom width of the excavation (11) is in the range of 0.5 meters to 5 meters, a top width of the excavation is in the range of 1.5 meters to 10 meters, and a depth of the excavation (11) is in the range of 1 meter to 7 meters.

6. The storage system of claim 1, wherein a distance between a ground surface and the rebar cage in the excavation (11) is in the range of 0.2 meters to 2 meters.

7. A method for producing of a storage system for storing compressed fluid, comprising:
providing an excavation (11) in the ground having a shape of an inverted rectangular trapezoidal prism;
providing a balloon arrangement and mounting the balloon arrangement within the excavation (11), the balloon arrangement comprising:
a rebar cage (121) arranged within the excavation (11); and
an inflatable balloon (122) arranged within the rebar cage (121) and configured for storing the compressed fluid, said inflatable balloon (122) having a middle portion (123) and two end portions (124, 125), one end portion of said two end portions includes a balloon inlet port (126) for providing access to an inner volume of the inflatable balloon (122), whereas the other end portion includes a balloon outlet port (127) for releasing the compressed fluid from the inner volume;
providing a filling material (13) and placing the filling material (13) within a volume between the inflatable balloon (122), bottom and walls of the excavation (11) to extend from the bottom up to a top of the excavation (11), thereby to fully surround the inflatable balloon (122); said filling material (13) being in a rigid and immobile state, and configured for providing further reinforcement in conjunction with the rebar cage to the inflatable balloon (122), and for anchoring the inflatable balloon (122) to the excavation (11);
providing a gas pipe assembly (14) comprising an inlet gas pipe (141) configured for filling the inflatable balloon (122) with the compressed fluid and an outlet gas pipe (142) configured for releasing the compressed fluid; and
coupling the inlet gas pipe (141) to the balloon inlet port (126) and the outlet gas pipe (142) to the balloon output port (127),
wherein the rebar cage (121) includes a plurality of rebar rods (1211) extending along the inflatable balloon (122) between the two end portions, and rebar hoops (1212) configured for binding the rebar rods (1211) to form a framework of the rebar cage (121),
wherein the middle portion (123) of the inflatable balloon (122) has a cylindrical shape which is tapered with contraction at the two end portions and towards the balloon inlet (126) and outlet (127) ports,
wherein the rebar rods (1211) follow an outer contour of the inflatable balloon (122) to conform to its shape, and
wherein diameters of the rebar hoops (1212) gradually decrease at the two end portions of the inflatable balloon (122) with contraction towards the balloon inlet (126) and outlet (127) ports.

8. The method of claim 7, further comprising providing a drainage pipe (143) and provide access of the drainage pipe (143) into the volume of the inflatable balloon (122).

## Patentansprüche

1. Speichersystem (10) zum Speichern von komprimierter Flüssigkeit, umfassend:
einen in dem Boden gemachten Aushub (11), welcher die Form eines umgedrehten rechteckigen trapezförmigen Prismas aufweist;
eine innerhalb des Aushubs (11) montierte Ballonanordnung, wobei die Ballonanordnung umfasst:
einen innerhalb des Aushubs (11) angeordneten Bewehrungskorb (121); und
einen aufblasbaren Ballon (122), welcher innerhalb des Bewehrungskorbes (121) angeordnet und konfiguriert ist zum Speichern der komprimierten Flüssigkeit, wobei der aufblasbare Ballon (122) einen mittleren Abschnitt (123) und zwei Endabschnitte (124, 125) aufweist, wobei ein Endabschnitt (124) der beiden Endabschnitte einen Balloneinlassanschluss (126) einschließt, um Zugang zu einem Innenvolumen (128) des aufblasbaren Ballons (122) bereitzustellen, während der andere Endabschnitt (125) einen Ballonauslassanschluss (127) zum Ablassen der komprimierten Flüssigkeit aus dem Innenvolumen (128) einschließt;
ein Füllmaterial (13), welches in einem Volumen (14) zwischen dem aufblasbaren Ballon (122), dem Boden (112) und den Wänden (113) des Aushubs (11) platziert ist, und sich von dem Boden (112) bis zu einer Oberseite (111) des Aushubs (11) erstreckt, wodurch der aufblasbare Ballon (122) vollständig umgeben ist; wobei sich das Füllmaterial (13) in einem starren und unbeweglichen Zustand befindet, und konfiguriert ist zum Bereitstellen weiterer Verstärkung für den aufblasbaren Ballon (122) in Verbindung mit dem Bewehrungskorb (121), und zum Verankern des aufblasbaren Ballons (122) in dem Aushub (11); und
eine Gasleitungsanordnung (14), umfassend:
eine Einlassgasleitung (141), welche mit dem Balloneinlassanschluss (126) gekoppelt ist, und
konfiguriert ist zum Befüllen des aufblasbaren Ballons (122) mit der komprimierten Flüssigkeit; und
eine Auslassgasleitung (142), welche mit dem Ballonauslassanschluss (127) gekoppelt ist, und
konfiguriert ist zum Ablassen der komprimierten Flüssigkeit,
wobei der Bewehrungskorb (121) eine Vielzahl von Bewehrungsstäben (1211), welche sich entlang des aufblasbaren Ballons (122) zwischen den beiden Endabschnitten erstrecken, und Bewehrungsringe (1212) einschließt, welche konfiguriert sind zum Binden der Bewehrungsstäbe (1211), um einen Rahmen des Bewehrungskorbs (121) zu bilden,
wobei der mittlere Abschnitt (123) des aufblasbaren Ballons (122) eine zylindrische Form aufweist, welche mit Kontraktion an den beiden Endabschnitten und in Richtung der Balloneinlass- (126) und -auslassanschlüsse (127) verjüngt ist,
wobei die Bewehrungsstäbe (1211) einer Außenkontur des aufblasbaren Ballons (122) folgen, um sich dessen Form anzupassen, und
wobei die Durchmesser der Bewehrungsringe (1212) an den beiden Endabschnitten des aufblasbaren Ballons (122) mit Kontraktion in Richtung der Balloneinlass- (126) und - auslassanschlüsse (127) allmählich abnehmen.

2. Speichersystem nach Anspruch 1, wobei die Bewehrungsringe (1212) durch Verschweißen mit den Bewehrungsstäben (1211) verbunden sind, wodurch eine Schweißkonstruktion gebildet wird.

3. Speichersystem nach Anspruch 1, wobei die Bewehrungsringe (1212) durch Binden unter Verwendung von Stahldrähten mit den Bewehrungsstäben (1211) verbunden sind, wodurch eine starre Struktur gebildet wird.

4. Speichersystem nach einem der Ansprüche 1 bis 3, wobei die Gasleitungsanordnung (14) weiter ein sich in das Volumen des aufblasbaren Ballons (122) erstreckendes Drainagerohr einschließt.

5. Speichersystem nach Anspruch 1, wobei eine Bodenbreite des Aushubs (11) im Bereich von 0,5 Metern bis 5 Metern liegt, eine Breite der Oberseite des Aushubs in dem Bereich von 1,5 Metern bis 10 Metern liegt, und eine Tiefe des Aushubs (11) in dem Bereich von 1 Meter bis 7 Metern liegt.

6. Speichersystem nach Anspruch 1, wobei ein Abstand zwischen einer Bodenfläche und dem Bewehrungskorb in dem Aushub (11) in dem Bereich von 0,2 Metern bis 2 Metern liegt.

7. Erzeugungsverfahren für ein Speichersystem zum Speichern von komprimierter Flüssigkeit,
umfassend:
Bereitstellen eines Aushubs (11) in dem Boden, welcher die Form eines umgedrehten rechteckigen trapezförmigen Prismas aufweist;
Bereitstellen einer Ballonanordnung und Montieren der Ballonanordnung innerhalb des Aushubs (11), wobei die Ballonanordnung umfasst:
einen innerhalb des Aushubs (11) angeordneten Bewehrungskorb (121); und
einen aufblasbaren Ballon (122), welcher innerhalb des Bewehrungskorbes (121) angeordnet und konfiguriert ist zum Speichern der komprimierten Flüssigkeit, wobei der aufblasbare Ballon (122) einen mittleren Abschnitt (123) und zwei Endabschnitte (124, 125) aufweist, wobei ein Endabschnitt der beiden Endabschnitte einen Balloneinlassanschluss (126) einschließt, um Zugang zu einem Innenvolumen des aufblasbaren Ballons (122) bereitzustellen, während der andere Endabschnitt einen Ballonauslassanschluss (127) zum Ablassen der komprimierten Flüssigkeit aus dem Innenvolumen einschließt;
Bereitstellen eines Füllmaterials (13) und Platzieren des Füllmaterials (13) innerhalb eines Volumens zwischen dem aufblasbaren Ballon (122), dem Boden und den Wänden des Aushubs (11), um sich von dem Boden bis zu einer Oberseite des Aushubs (11) zu erstrecken, wodurch der aufblasbare Ballon (122) vollständig umgeben ist; wobei sich das Füllmaterial (13) in einem starren und unbeweglichen Zustand befindet, und konfiguriert ist zum Bereitstellen weiterer Verstärkung für den aufblasbaren Ballon (122) in Verbindung mit dem Bewehrungskorb und zum Verankern des aufblasbaren Ballons (122) in dem Aushub (11);
Bereitstellen einer Gasleitungsanordnung (14), welche eine Einlassgasleitung (141) umfasst, welche konfiguriert ist zum Befüllen des aufblasbaren Ballons (122) mit der komprimierten Flüssigkeit, und eine Auslassgasleitung (142), welche konfiguriert ist zum Ablassen der komprimierten Flüssigkeit; und
Koppeln der Einlassgasleitung (141) mit dem Balloneinlassanschluss (126) und der Auslassgasleitung (142) mit dem Ballonauslassanschluss (127),
wobei der Bewehrungskorb (121) eine Vielzahl von Bewehrungsstäben (1211), welche sich entlang des aufblasbaren Ballons (122) zwischen den beiden Endabschnitten erstrecken, und Bewehrungsringe (1212) einschließt, welche konfiguriert sind zum Binden der Bewehrungsstäbe (1211), um einen Rahmen des Bewehrungskorbs (121) zu bilden,
wobei der mittlere Abschnitt (123) des aufblasbaren Ballons (122) eine zylindrische Form aufweist, welche mit Kontraktion an den beiden Endabschnitten und in Richtung der Balloneinlass- (126) und -auslassanschlüsse (127) verjüngt ist,
wobei die Bewehrungsstäbe (1211) einer Außenkontur des aufblasbaren Ballons (122) folgen, um sich dessen Form anzupassen, und
wobei die Durchmesser der Bewehrungsringe (1212) an den beiden Endabschnitten des aufblasbaren Ballons (122) mit Kontraktion in Richtung der Balloneinlass- (126) und - auslassanschlüsse (127) allmählich abnehmen.

8. Verfahren nach Anspruch 7, weiter umfassend das Bereitstellen eines Drainagerohrs (143) und das Bereitstellen eines Zugangs des Drainagerohrs (143) in das Volumen des aufblasbaren Ballons (122).

## Revendications

1. Système de stockage (10) pour stocker un fluide comprimé, comprenant :
une excavation (11) réalisée dans le sol présentant une forme de prisme trapézoïdal rectangulaire inversé ;
un agencement de ballonnet monté à l'intérieur de l'excavation (11), l'agencement de ballonnet comprenant :
une cage d'armature (121) agencée dans l'excavation (11) ; et
un ballonnet gonflable (122) agencé à l'intérieur de la cage d'armature (121) et configuré pour stocker le fluide comprimé, ledit ballonnet gonflable (122) présentant une partie centrale (123) et deux parties d'extrémité (124, 125), une partie d'extrémité (124) desdites deux parties d'extrémité inclut un orifice d'entrée de ballonnet (126) pour fournir un accès à un volume interne (128) du ballonnet gonflable (122), tandis que l'autre partie d'extrémité (125) inclut un orifice de sortie de ballonnet (127) pour libérer le fluide comprimé du volume interne (128) ;
un matériau de remplissage (13) placé dans un volume (14) entre le ballonnet gonflable (122), le fond (112) et les parois (113) de l'excavation (11), et s'étendant du fond (112) jusqu'à un sommet (111) de l'excavation (11), entourant ainsi entièrement le ballonnet gonflable (122) ; ledit matériau de remplissage (13) étant dans un état rigide et immobile, et configuré pour fournir en outre un renforcement conjointement avec la cage d'armature (121) au ballonnet gonflable (122), et pour ancrer le ballonnet gonflable (122) sur l'excavation (11) ; et
un ensemble tuyau de gaz (14), comprenant :
un tuyau d'entrée de gaz (141) accouplé à l'orifice d'entrée de ballonnet (126) et
configuré pour remplir le ballonnet gonflable (122) avec le fluide comprimé ; et
un tuyau de gaz de sortie (142) accouplé à l'orifice de sortie de ballonnet (127), et
configuré pour libérer le fluide comprimé,
dans lequel la cage d'armature (121) inclut une pluralité de tiges d'armature (1211) s'étendant le long du ballonnet gonflable (122) entre les deux parties d'extrémité, et des anneaux d'armature (1212) configurés pour relier les tiges d'armature (1211) pour former une cage d'armature (121),
dans lequel la partie centrale (123) du ballonnet gonflable (122) présente une forme cylindrique qui est conique avec une contraction au niveau des deux parties d'extrémité et en direction des orifices d'entrée (126) et de sortie (127) du ballonnet,
dans lequel les tiges d'armature (1211) suivent un contour externe du ballonnet gonflable (122) pour se conformer à sa forme, et
dans lequel les diamètres des anneaux d'armature (1212) diminuent progressivement au niveau des deux parties d'extrémité du ballonnet gonflable (122) avec une contraction vers les orifices d'entrée (126) et de sortie (127) du ballonnet.

2. Système de stockage selon la revendication 1, dans lequel les anneaux d'armature (1212) sont liés aux tiges d'armature (1211) par soudage, formant ainsi une structure d'assemblage soudé.

3. Système de stockage selon la revendication 1, dans lequel les anneaux d'armature (1212) sont liés aux tiges d'armature (1211) en les attachant en utilisant des fils d'acier, formant ainsi une structure rigide.

4. Système de stockage selon l'une quelconque des revendications 1 à 3, dans lequel l'ensemble tuyau de gaz (14) inclut en outre un tuyau de vidange s'étendant dans le volume du ballonnet gonflable (122).

5. Système de stockage selon la revendication 1, dans lequel une largeur inférieure de l'excavation (11) est dans la plage de 0,5 mètre à 5 mètres, une largeur supérieure de l'excavation est dans la plage de 1,5 mètre à 10 mètres, et une profondeur de l'excavation (11) est dans la plage de 1 mètre à 7 mètres.

6. Système de stockage selon la revendication 1, dans lequel une distance entre une surface de sol et la cage d'armature dans l'excavation (11) est dans la plage de 0,2 mètre à 2 mètres.

7. Procédé de production d'un système de stockage de fluide comprimé, comprenant :
la fourniture d'une excavation (11) dans le sol présentant une forme de prisme trapézoïdal rectangulaire inversé ;
la fourniture d'un agencement de ballonnet et le montage de l'agencement de ballonnet dans l'excavation (11), l'agencement de ballonnet comprenant :
une cage d'armature (121) agencée dans l'excavation (11) ; et
un ballonnet gonflable (122) agencé à l'intérieur de la cage d'armature (121) et configuré pour stocker le fluide comprimé, ledit ballonnet gonflable (122) présentant une partie centrale (123) et deux parties d'extrémité (124, 125), une partie d'extrémité desdites deux parties d'extrémité incluant un orifice d'entrée de ballonnet (126) pour fournir un accès à un volume interne du ballonnet gonflable (122), tandis que l'autre partie d'extrémité inclut un orifice de sortie de ballonnet (127) pour libérer le fluide comprimé du volume interne ;
la fourniture d'un matériau de remplissage (13) et le placement du matériau de remplissage (13) dans un volume entre le ballonnet gonflable (122), le fond et les parois de l'excavation (11) pour s'étendre du fond vers le sommet de l'excavation (11), entourant ainsi entièrement le ballonnet gonflable (122) ; ledit matériau de remplissage (13) étant dans un état rigide et immobile, et configuré pour fournir en outre un renforcement conjointement avec la cage d'armature au ballonnet gonflable (122), et pour ancrer le ballonnet gonflable (122) sur l'excavation (11) ;
la fourniture d'un ensemble tuyau de gaz (14) comprenant un tuyau de gaz d'entrée (141) configuré pour remplir le ballonnet gonflable (122) avec le fluide comprimé et un tuyau de gaz de sortie (142) configuré pour libérer le fluide comprimé ; et
l'accouplement du tuyau d'entrée de gaz (141) à l'orifice d'entrée de ballonnet (126) et du tuyau de sortie de gaz (142) à l'orifice de sortie de ballonnet (127),
dans lequel la cage d'armature (121) inclut une pluralité de tiges d'armature (1211) s'étendant le long du ballonnet gonflable (122) entre les deux parties d'extrémité, et des anneaux d'armature (1212) configurés pour relier les tiges d'armature (1211) pour former une cage d'armature (121),
dans lequel la partie centrale (123) du ballonnet gonflable (122) présente une forme cylindrique qui est conique avec une contraction au niveau des deux parties d'extrémité et en direction des orifices d'entrée (126) et de sortie (127) du ballonnet,
dans lequel les tiges d'armature (1211) suivent un contour externe du ballonnet gonflable (122) pour se conformer à sa forme, et
dans lequel les diamètres des anneaux d'armature (1212) diminuent progressivement au niveau des deux parties d'extrémité du ballonnet gonflable (122) avec une contraction vers les orifices d'entrée (126) et de sortie (127) du ballonnet.

8. Procédé selon la revendication 7, comprenant en outre la fourniture d'un tuyau de vidange (143) et la fourniture d'un accès du tuyau de vidange (143) dans le volume du ballonnet gonflable (122).
